# EUROPÄISCHE PATENTSCHRIFT

(11) **EP 2 476 930 B1**
(45) Veröffentlichungstag und Bekanntmachung des Hinweises auf die Patenterteilung: **12.06.2013**
(21) Anmeldenummer: 11009880.3
(22) Anmeldetag: 15.12.2011
(51) Int. Cl.: F16F 9/58, F16F 9/54, F16F 9/50, B60G 15/06, B60G 17/02, B60G 17/06, B60G 13/00, B60G 11/52

(54) **Feder-Dämpfersystem, insbesondere für eine Radaufhängung von Kraftfahrzeugen**
Fibre dampening system, in particular for wheel suspensions in motor vehicles
Système d'amortissement à ressort, en particulier pour une suspension de roue d'un véhicule

(30) Priorität: 14.01.2011 DE 102011008618
(43) Veröffentlichungstag der Anmeldung: 18.07.2012
(73) Patentinhaber: Audi AG, 85045 Ingolstadt (DE)
(72) Erfinder: Lamers, Stephan, 93336 Altmannstein (DE); Conrad, Thomas, 91757 Treuchtlingen (DE)

(56) Entgegenhaltungen:
- EP-A1- 2 012 043
- WO-A1-2008/080433
- DE-A1- 10 306 157
- DE-A1-102004 019 991
- FR-A- 1 215 172
- US-A1- 2007 200 311

## Beschreibung

Die Erfindung betrifft eine Feder-Dämpfersystem, insbesondere für eine Radaufhängung von Kraftfahrzeugen, gemäß dem Oberbegriff des Patentanspruches 1.

Feder-Dämpfersysteme an Radaufhängungen von Kraftfahrzeugen mit einer Tragfeder, einer Zusatzfeder und einem Teleskop-Stoßdämpfer sind vielfach bekannt, beispielsweise aus der DE 103 06 157 A1. Die Zusatzfeder dient dabei insbesondere dazu, höhere statische und dynamische Belastungen der Tragfeder aufzufangen und die Federkennlinie progressiv anzuheben. Die Auslegung derartiger Feder-Dämpfer-Anordnungen ist dabei in der Regel so, dass zunächst zur Erzielung komfortabler Federeigenschaften alleine die Tragfeder mit ihrer Federrate wirkt und bei weiterem Einfedern dann die Gesamtfederrate durch den Einsatz der Zusatzfeder entsprechend ansteigt. Eine exakte Einstellung dieser Federeigenschaften, insbesondere des Weges bis zum Einsatz der Zusatzfeder, ist bei den verschiedenartigen bekannten passiven und aktiven Feder-Dämpfersystemen aber konstruktiv abhängig u.a. von der mehr oder weniger groben Abstufung der Tragfeder-Federraten zur Kompensation der unterschiedlichen, ausstattungsabhängigen Achslasten innerhalb einer Fahrzeugreihe und/oder von der eingestellten Trimmlage und/oder der Anordnung der Zusatzfeder innerhalb der Radaufhängung, etc. und wird u.a. weiterhin beeinflusst durch die nicht absolut vermeidbaren Ist-/Soll-abweichungen der kalkulierten Achslasten und Tragfeder-Federraten, der achslastbeeinflussenden Zuladung, dem altersbedingten Setzen der elastischen Radaufhängungskomponenten und bei aktiven Systemen dem Hystereseverhalten der Trimmlagenanpassung. Der relative Zusatzfedereinsatzpunkt weicht durch die genannten Einflussfaktoren oft relativ stark vom gewünschten Soll ab.

Aufgabe der Erfindung ist es, eine Feder-Dämpfersystem, insbesondere für eine Radaufhängung von Kraftfahrzeugen vorzuschlagen, das in seiner Konstruktion eine automatische Anpassung an unterschiedliche Ausführungen von Fahrzeugtypen und/oder an Beladungsverhältnisse im Fahrbetrieb ermöglicht.

Diese Aufgabe wird erfindungsgemäß mit den Merkmalen des Patentanspruches 1 gelöst. Vorteilhafte und besonders zweckmäßige Weiterbildungen der Erfindung sind in den weiteren Patentansprüchen angeführt.

Gemäß Anspruch 1 wird ein Feder-Dämpfersystem, insbesondere für eine Radaufhängung von Kraftfahrzeugen, mit wenigstens einer Tragfeder, wenigstens einem Stoßdämpfer und wenigstens einer Zusatzfeder vorgeschlagen, die zwischen einem Aufbau des Kraftfahrzeugs und wenigstens einem Radführungselement angeordnet sind, wobei bevorzugt vorgesehen ist, dass diese Elemente im montierten Zustand im Wesentlichen in Fahrzeughochachsenrichtung wirken. Erfindungsgemäß ist zwischen der mindestens einen Zusatzfeder und dem Aufbau oder zwischen der mindestens einen Zusatzfeder und dem Radführungselement eine Feder-/Dämpfereinheit eingeschaltet, die eine Dämpfereinrichtung sowie ein Positionierfederelement aufweist, die mittelbar oder unmittelbar miteinander gekoppelt sowie in Reihe geschaltet sind. Weiter ist auf der dem Positionierfederelement zugewandten Positionierfederelementseite der Feder-/Dämpfereinheit ein weiteres ein- oder mehrteiliges Federelement in Form eines Progressionsfederelementes angeordnet, das, mittelbar oder unmittelbar, an der Dämpfereinrichtung und/oder an dem der Dämpfereinrichtung positionierfederelementseitig gegenüberliegenden Bauteil angebunden ist und das in einer definierten Grundstellung einen definierten progressionsfederelementseitigen Spaltabstand (s) als Federweg ausbildet. Ferner weist die Feder-/Dämpfereinheit ein Nachführfederelement auf, das auf funktionell gegenüberliegenden Seiten der Dämpfereinrichtung an einem dort jeweils zugeordneten Bauteil angreift und/oder angebunden ist.

Mit einem derartigen Aufbau wird erreicht, dass bei fehlender Druckbelastung, insbesondere bei einer definierten statischen oder quasistatischen Entlastung, des Feder-/Dämpfersystems, ein Nachführen der positionierfederabgewandten Seite der Dämpfereinrichtung erfolgt. Insbesondere erfolgt dieses Nachführen so, dass damit auch ein beidseitiges Anliegen der Zusatzfeder an einerseits der Feder-/Dämpfereinheit und an andererseits dem Aufbau oder dem Radführungselement bewirkt wird.

An dieser Stelle sei ausdrücklich erwähnt, dass die Zusatzfeder innerhalb der unterschiedlich ausgebildeten Achsen eines Kraftfahrzeuges an verschiedenen Positionen angeordnet bzw. eingesetzt werden kann, so zum Beispiel auf dem Teleskop-Stoßdämpfer (= Hauptdämpfer). Die Zusatzfeder kann aber auch unabhängig von Hauptdämpfer und Hauptfeder positioniert werden. So kann zum Beispiel die Zusatzfeder auch zwischen einem Achslenker und der Karosserie oder dem Hilfsrahmen oder zwischen dem Radträger/ Schwenklager und der Karosserie positioniert werden oder noch allgemeiner zwischen allen Elementen einer Achse die beim Durchfedern eine Relativbewegung zueinander machen. Ebenso wie die getrennte Anordnung von Hauptfeder und Hauptdämpfer ist im Übrigen auch die koaxiale, funktionell parallele Anordnung von Hauptfeder, Stoßdämpfer und Zusatzfeder innerhalb eines "Federbeins" möglich. Diese Varianten sollen ausdrücklich mit vom Schutzumfang umfasst sein.

Grundsätzlich könnte vorgesehen sein, dass das Nachführfederelement auf funktionell gegenüberliegenden Seiten der Dämpfereinrichtung an dieser Dämpfereinrichtung selbst angreift und/oder angebunden ist. Dies führt aber im statischen oder quasistatischen Betriebszustand zu einem in der Regel unerwünschten Verspannen der drei dann in Reihe geschalteten und wirkenden Federelemente Zusatzfeder, Nachführfederelement und Positionierfederelement. Der Betrag des Spaltabstand (s) ist in diesem Fall abhängig vom Grad der Verspannung. Gemäß einer besonders bevorzugten konkreten Ausgestaltung ist vorgesehen, dass das Nachführfederelement einerseits mittel- oder unmittelbar an der positionsfederelementabgewandten Seite der Dämpfereinrichtung und anderseits auf der gegenüberliegenden Seite der Dämpfereinrichtung mittel- oder unmittelbar an dem der Dämpfereinrichtung positionierfederelementseitig gegenüberliegenden Bauteil, insbesondere mittelbar oder unmittelbar am Aufbau oder am Radführungselement, angebunden ist. Dadurch wird insbesondere sichergestellt, dass das Nachführfederelement im statischen oder quasistatischen Belastungszustand im Einstellbereich der Feder-/Dämpfereinheit eine Entspannung des Positionierfederelementes in einem definierten Maße zulässt.

Besonders bevorzugt ist hierbei eine Ausgestaltung, bei der im statischen oder quasistatischen Zustand innerhalb des Einstellbereiches der Feder-/ Dämpfereinrichtung die Größe des Progressionsfederelement-Spaltabstandes durch die Länge des entspannten Positionierfederelementes und/oder durch das Hystereseverhalten der Dämpfereinrichtung vorgegeben ist.

Gemäß einer besonders bevorzugten Ausführungsform ist die Feder-Dämpfereinheit so ausgelegt, dass das Positionierfederelement die Dämpfereinrichtung bei einer definierten Belastung, insbesondere bei einer definierten statischen oder quasistatischen Belastung, und einer dadurch bedingten Relativverlagerung zwischen Aufbau und Radführungselement so nachführt, dass sich ein Progressionsfederelement-Spaltabstand, insbesondere in etwa der Progressionsfederelement-Spaltabstand der Grundstellung , einstellt, während bei einer demgegenüber definiert größeren, insbesondere dynamischen Belastung in Druckrichtung, die zeit- und belastungsabhängige Längenanpassung der Dämpfungseinrichtung nicht ausreicht, um die Änderung des Progressionsfederelement-Spaltabstandes kleiner zu halten als den Progressionsfederelement-Spaltabstand im statischen oder quasistatischen Belastungszustand und dadurch das Progressionsfederelement unter Überbrückung des Progressionsfederelement-Spaltabstandes in eine Anlage- und Wirkverbindung mit dem entsprechend spaltabstandseitig zugeordneten Bauteil gelangt. Dadurch ergeben sich die zuvor genannten Vorteile.

Grundsätzlich können das Positionierfederelement und das Progressionsfederelement durch mehrere separate Federelemente oder mehrere an einem Bauteil ausgebildete Federelementabschnitte gebildet sein, um eine einfache funktionale Trennung der Bauteile zu ermöglichen. Gemäß einer hierzu alternativen Ausgestaltung kann aber auch vorgesehen sein, dass das Positionierfederelement und das Progressionsfederelement durch ein einziges Federelement, insbesondere durch ein Elastomerelement, gebildet sind, das eine progressive Federkennlinie aufweist, insbesondere eine progressive Federkennlinie mit einer ab einem definierten Verlagerungsweg stark ansteigenden hoher Progression.

Das Feder-Dämpfersystem kann grundsätzlich so ausgelegt sein, dass das Progressionsfederelement eine beliebig einstellbare Steifigkeitscharakteristik aufweist und somit ein beliebig einstellbares Ansprechverhalten der Zusatzfeder ermöglicht wird. Alternativ oder zusätzlich dazu kann das Progressionsfederelement auch stoffgleicher Bestandteil eines an der dämpfereinrichtungsabgewandten Seite des Positionierfederelementes mittel- oder unmittelbar, funktionell starr angebundenen, funktionell steifen Elementes sein. Mit anderen Worten soll hier dem Grunde nach die Möglichkeit des Aussparens des Progressionsfederelementes und damit ein harter Anschlag beschrieben werden, der in die Feder-/Dämpfereinheit zum Beispiel direkt aufbauseitig oder radführungsseitig integriert ist.

Bevorzugt ist die wenigstens eine Dämpfereinrichtung des Feder- und Dämpfersystems durch einen hydraulisch wirkenden Dämpfer gebildet. Grundsätzlich könnte jedoch auch ein zum Beispiel elektrisch wirkender Dämpfer eingesetzt werden.

Gemäß einer besonders bevorzugten konkreten Ausgestaltung ist vorgesehen, dass die Dämpfereinrichtung durch eine hydraulische Dämpfungseinrichtung ausgebildet ist, dessen Gehäuse durch ein Trennelement in mehrere, insbesondere zwei Hydraulikkammern unterteilt ist, wobei das Trennelement zumindest eine Einrichtung zum definierten Überströmen von in den Hydraulikkammern befindlicher Hydraulikflüssigkeit aufweist.

Die hydraulische Dämpfungseinrichtung kann baulich und räumlich günstig mit einem zylindrischen Gehäuse ausgeführt und mit der Zusatzfeder aus gummielastischem Material ringförmig um die Kolbenstange des Stoßdämpfers herum angeordnet sein, so dass nur wenig zusätzlicher Einbauraum im Bereich der Radaufhängung erforderlich ist.

Dabei kann das Trennelement bevorzugt als ein Ringkolben mit einer aus dem Gehäuse herausgeführten Stellhülse ausgeführt sein, wobei bevorzugt vorgesehen ist, dass die Stellhülse mit einer die Zusatzfeder teilweise umschließenden Stütztasse fest verbunden ist. Somit können das Dämpfungseinrichtung und die Zusatzfeder als eine Vormontageeinheit ausgebildet sein, die über die Kolbenstange des Stoßdämpfers aufstülpbar ist.

Des Weiteren kann die Positionierfeder durch eine ringförmige Büchse aus gummielastischem Material gebildet sein, die zwischen dem Gehäuse der Dämpfungseinrichtung und einem am Aufbau des Kraftfahrzeuges befestigten Lagergehäuse für ein die Kolbenstange des Stoßdämpfers aufnehmendes Dämpferlager eingesetzt ist und den Progressionsfederelement-Spaltabstand als Einfederweg mit relativ geringer Federsteifigkeit definiert. Zum Beispiel kann die Büchse unmittelbar an die Stirnwand des Gehäuses anvulkanisiert sein.

Zwischen dem Gehäuse der Dämpfungseinrichtung und dem Lagergehäuse des Kolbenstangen - Dämpferlagers und/oder zwischen dem Gehäuse und der Stütztasse des Ringkolbens kann zudem ein das Progressionsfederelement ausbildender gummielastischer Anschlag, insbesondere ein ringförmiger gummielastischer Anschlag, vorgesehen sein.

Weiter kann zwischen der dem Progressionsfederelement abgewandten Seite des Gehäuses der Dämpfungseinrichtung und einer der Zusatzfeder zugewandten Stütztasse des Trennelementes ein bevorzugt ringförmiger, gummielastischer Anschlag vorgesehen sein, der zum Beispiel Anschlaggeräusche beim Einfedern der Feder-Dämpfer-Anordnung ausschließt und stufenförmige Übergänge in der Federkennlinie weitestgehend ausgleicht.

In vorteilhafter Weiterbildung der Erfindung können in das Trennelement bzw. bevorzugt in einen das Trennelement ausbildenden Ringkolben ein oder mehrere Drosselventile als Drosseleinrichtung eingesetzt sein, wobei bevorzugt vorgesehen ist, dass die Drosseleinrichtung so ausgelegt ist, dass auch andere als proportionale Abhängigkeiten zwischen Dämpferkraft und Längenänderungsgeschwindigkeit der Dämpfereinrichtung realisierbar sind und gegebenenfalls auch ein Blockieren der Dämpfereinrichtung bei Erreichen einer Schwell-Dämpferkraft möglich ist. Dadurch wird bei einem dynamischen Einfedern aufgrund der dann relativ hohen Dämpfereinrichtungskraft und der im Vergleich dazu relativ geringen Positionierfederelementsteifigkeit der Progressionsfederelement-Spaltabstand überbrückt, so dass die Zusatzfeder über das Progressionsfederelement und über die Dämpfereinrichtung zum Einsatz kommt. Die Drosselventile können insbesondere durch Kanäle definierten Durchströmquerschnittes oder als Ventile mit in der Druck- und Zugstufe der Dämpfungseinrichtung unterschiedlicher Drosselwirkung ausgeführt sein.

Schließlich kann in besonders bevorzugter Weise die Feder-/Dämpfereinheit an einem Federbein der Radaufhängung des Kraftfahrzeuges mit einer Schraubendruckfeder als Tragfeder verwendet sein, die um den Teleskop-Stoßdämpfer und um die Zusatzfeder und die Feder-/Dämpfereinheit herum angeordnet ist und sich an einem aufbauseitigen Federteller einerseits und an einem Federteller eines Radaufhängungselementes oder eines Dämpferrohrs des Stoßdämpfers andererseits abstützt.

Die Formulierung von Verfahrensansprüchen mit einem oder mehreren Merkmalen des vor- und nachstehend beschriebenen Feder-/Dämpfersystems behält sich die Anmelderin ausdrücklich vor.

Die Erfindung wird nachfolgend anhand eines konkreten Ausführungsbeispiels sowie anhand mehrerer Prinzipskizzen näher erläutert. Die schematischen Figuren zeigen in:

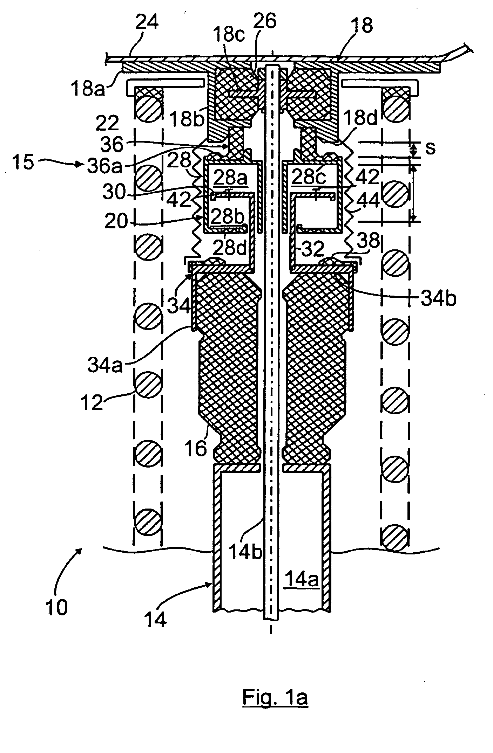

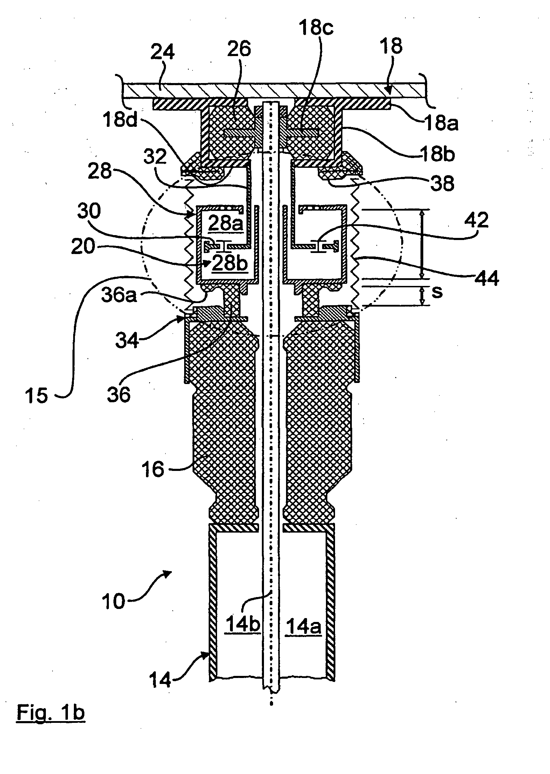

- Fig. 1 a: den oberen Abschnitt eines Federbeines für eine Radaufhängung für Kraftfahrzeuge, mit einer Tragfeder, einem Teleskop-Stoßdämpfer und einer zwischen einer Zusatzfeder und einem Dämpferlager angeordneten Feder-/Dämpfereinheit mit einer Positionierfeder, einer Progressionsfeder, einer Dämpfereinrichtung und einer am Aufbau des Kraftfahrzeuges angebundenen Nachführfeder;
- Fig. 1 b: eine zur Ausgestaltung nach Fig. 1a alternative Ausgestaltung;
- Fig. 2a: eine Prinzipdarstellung eines Feder-Dämpfersystems gemäß Fig. 1a bzw. 1b in einer statischen Mittelstellung, die der Grundstellung bzw. Konstruktionslage des Kraftfahrzeuges entspricht;
- Fig. 2b: das Feder-Dämpfersystem nach Fig. 2a in einer zum Beispiel durch Zuladung eingefederten Position, bei der der Spaltabstand s über das Dämpfungseinrichtung und die Positionierfeder weiter aufrechterhalten ist;
- Fig. 2c: das Feder-Dämpfersystem nach Fig. 2a in einer ausgefederten Position unter Beibehaltung des gleichen Spaltabstandes s wie in den Fig. 2a und 2b;
- Fig. 2d: das Feder-Dämpfersystem nach Fig. 2a in einem dynamisch eingefederten Zustand, bei dem der Federweg s aufgebraucht

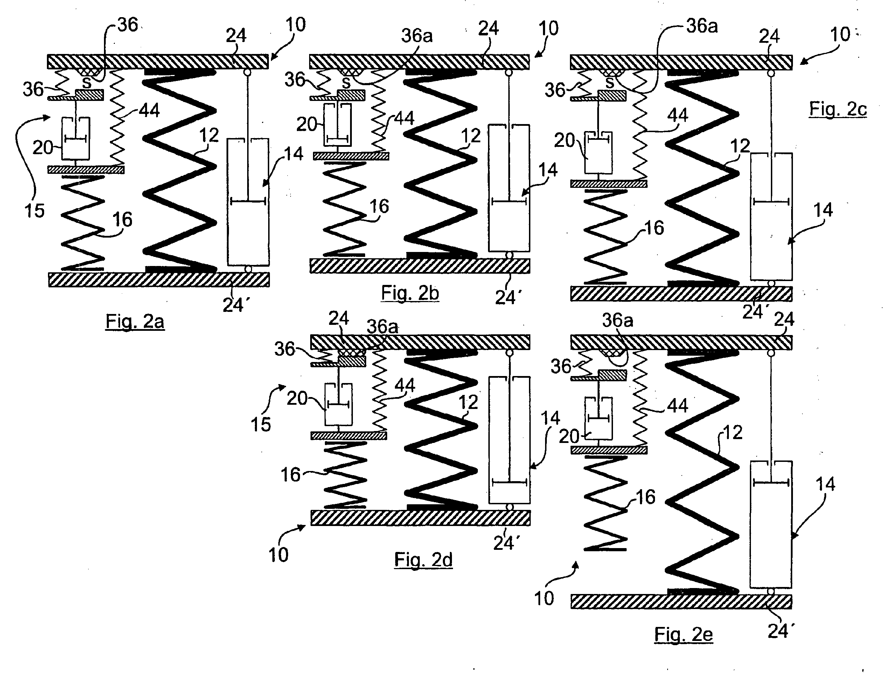

- Fig. 2d: und die Progressionsfeder am Aufbau des Kraftfahrzeuges abgestützt ist; das Feder-Dämpfersystem nach Fig. 2a in einem dynamisch ausgefederten Zustand;

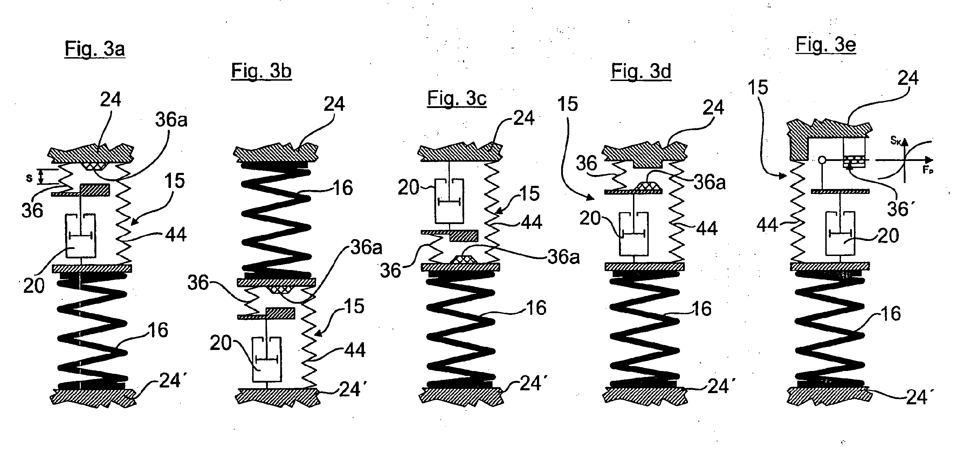

- Fig. 3a bis e: unterschiedliche Gestaltungs- bzw. Anordnungsmöglichkeiten der aus Dämpfereinrichtung, Positionierfeder, Progressionsfeder und Nachführfeder aufgebauten Feder-/Dämpfereinheit mitsamt einer dieser Feder-/Dämpfereinheit zugeordneten Zusatzfeder;

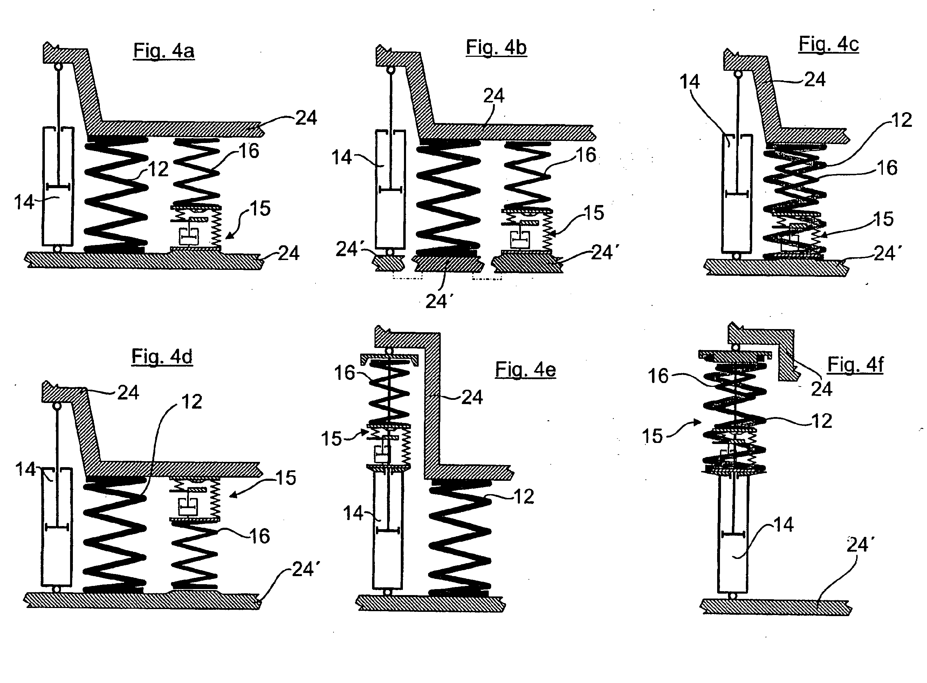

- Fig. 4a bis g: mögliche Anordnungen der Zusatzfeder mitsamt zugeordneter Feder-/Dämpfereinheit innerhalb unterschiedlicher Feder-/ Dämpfersysteme.

In der Fig. 1a ist in einem Mittellängsschnitt der obere Abschnitt eines Federbeines 10 für eine Radaufhängung eines Kraftfahrzeuges, insbesondere eines Personenkraftwagens, dargestellt, das sich im Wesentlichen aus einer Schraubendruckfeder als Tragfeder 12, einem Teleskop-Stoßdämpfer 14 üblicher Bauart, einer hier aus einem gummielastischen Material gefertigten Zusatzfeder 16, einem oberen Dämpferlager 18 und einer zwischen der Zusatzfeder 16 und dem Dämpferlager 18 eingesetzten Feder-/Dämpfereinheit 15, die durch eine Dämpfungseinrichtung 20, ein Positionierfederelemt 36, ein Progressionsfederelement 36a und ein Nachführfederelement 44 ausgebildet wird, zusammensetzt.

Die Tragfeder 12 stützt sich an ihrem oberen Ende über einen Federteller 22 an dem nicht weiter dargestellten Aufbau 24 des PKW's ab, während das untere Ende (nicht dargestellt) zum Beispiel an einem Federteller abgestützt ist, der an dem Dämpferrohr 14a des Stoßdämpfers 14 befestigt ist.

Das Dämpferlager 18 weist eine Tragplatte 18a auf, über die sie mit dem Aufbau 24 zum Beispiel mittels nicht dargestellter Schraubverbindungen verschraubt ist. An die Tragplatte 18a ist das zylinderförmige Lagergehäuse 18b angeformt, innerhalb dem in einem gummielastischen Lagerkörper 26 und einer Ankerplatte 18c die Kolbenstange 14b des Stoßdämpfers 14 gehalten ist.

Die Dämpfungseinrichtung 20 weist ein ringzylinderförmiges Gehäuse 28 auf, das mittels eines Ringkolbens 30 als Trennelement in zwei mit Hydraulikflüssigkeit befüllte Hydraulikkammern 28a, 28b unterteilt ist. In dem Ringkolben 30 sind mehrere Drosselelemente bzw. Drosselventile 42 (nur angedeutet) vorgesehen, die eine definierte Durchströmverbindung zwischen den Hydraulikkammern 28a, 28b herstellen.

Der axial in dem Gehäuse 28 geführte Ringkolben 30 ist mit einer nach unten aus dem Gehäuse 28 flüssigkeitsdicht herausgeführten Stellhülse 32 fest verbunden, an die eine Stütztasse 34 zum Beispiel über eine Schweißverbindung angeschlossen ist.

Die Stütztasse 34 schließt an die ringförmig ausgeführte, auf die Kolbenstange 14b aufgestülpte Zusatzfeder 16 an, wobei deren Umfangswände 34a den oberen Abschnitt der Zusatzfeder 16 umfassen.

Zwischen dem Gehäuse 28 der Dämpfungseinrichtung 20 und der Stirnwand 18d des Dämpfungslagers 18 ist eine büchsenförmige, gummielastische Positionierfeder 36 als Bestandteil der Feder-/Dämpfereinheit 15 angeordnet, an die zusätzlich ein ringförmiger Anschlagpuffer 36a als Progressionsfeder und damit als weiterer Bestandteil der Feder-/Dämpfereinheit 15 angeformt ist. Die Positionierfeder 36 ist mit der Stirnwand 18d des Dämpferlagers 18 und mit der Stirnwand 28c des Gehäuses 28 zum Beispiel durch Klemmen, Vulkanisation oder Kleben relativ fest verbunden und definiert einen Spaltabstand s zwischen dem Dämpferlager 18 und dem Gehäuse 28 der Dämpfungseinrichtung 20.

Weiter ist ein Anschlagdämpfer 38 an der ringförmigen Stirnwand 34b der Stütztasse 34 anvulkanisiert, der mit der unteren Stirnwand 28d des Gehäuses 28 der Dämpfungseinrichtung 20 zusammenwirkt.

Ferner erstreckt sich von der Stirnwand 18d des Dämpferlagers 18 eine ringförmige Nachführfeder 44 nach unten bis zur Stütztasse 34 und ist dort angebunden. Die Nachführfeder 44 umschließt hier die Dämpfereinrichtung 20 ringförmig und ist ebenfalls Bestandteil der Feder-/Dämpfereinheit 15.

Das Federbein 10 ist in der Grundstellung bzw. Konstruktionslage des Kraftfahrzeugs gezeichnet; das heißt, das Federbein 10 nimmt eine zwischen der eingefederten und der ausgefederten Position definierte Höhenlage ein, wobei die durch das Fahrzeuggewicht auftretende, statische Last im Wesentlichen über die Tragfeder 12 aber auch geringfügig über die parallel zur Tragfeder 12 und zueinander in Reihe geschaltet und wirkendenden Federelemente Zusatzfeder 16 und Nachführfederelement 44 abgestützt ist.

In der Fig. 1b ist eine zur Fig. 1 a alternative Ausgestaltung gezeigt, die nur insoweit beschrieben wird als sich Unterschiede zur Ausgestaltung nach Fig. 1 a ergeben. Im Unterschied zur Fig. 1 a ist hier die Feder-/Dämpfereinheit 15 so um 180° verdreht eingebaut bzw. angeordnet, dass die Stellhülse 32 hier an die Stirnwand 18d anschließt und dementsprechend der aus einem gummielastischen Elastomermaterial hergestellte Anschlagpuffer 38 an der Stirnwand 18d angeordnet ist. Dementsprechend ist die Positionierfeder 36 bei dieser Ausgestaltung der Fig. 1b mit ihrem dämpfereinrichtungsabgewandten Ende mit der der Zusatzfeder 16 zugeordneten Stütztasse 34 verbunden. Ansonsten entspricht der Aufbau und die Funktionsweise dem- bzw. derjenigen der Ausgestaltung nach Fig. 1a. Die Ausgestaltung der Fig. 1b entspricht der eines Dämpferbeins ohne Tragfeder.

Die Funktionsweise dieser Ausgestaltungen gemäß den Fig. 1 a und 1b wird nachfolgend in Verbindung mit den Fig. 2a bis 2d näher erläutert, die schematische Prinzipdarstellungen dieser Ausführungsvariante darstellen und mittels denen das der vorliegenden Erfindung zugrundeliegende Wirkprinzip besonders vorteilhaft näher erläutert werden kann: Die Fig. 2a zeigt eine Konstruktionslage (Grund- oder Mittelstellung) des Feder-Dämpfersystems bzw. des Federbeines 10, bei der die Größe des hier der Einfachheit halber Spaltabstand s genannten Progressionsfederelement-Spaltabstandes durch die Länge des entspannten Positionierfederelementes 36 und/oder durch das Hystereseverhalten der Dämpfereinrichtung 20 definiert ist. Zudem ist hier auch noch beispielhaft und schematisch ein Radführungselement 24' dargestellt.

Ist das Kraftfahrzeug, wie in der Fig. 2b dargestellt, durch statische bzw. quasistatische Belastung eingefedert, zum Beispiel durch zusätzliche Beladung, so stellt die Positionierfeder 36 die Beibehaltung des Spaltabstands s bei dieser statischen bzw. quasistatischen Belastung dadurch sicher, dass sie einen entspannten Zustand einnimmt indem sie die Längenanpassung, konkret die Verkürzung der mit ihr in Reihe geschalteten Dämpfereinrichtung 20 bewirkt. Im gezeigten Fall wird weiterhin die Tragfeder 12 komprimiert, wodurch die Kolbenstange 14b des Stoßdämpfers 14 nach unten in das Dämpferrohr 14a einfährt. Ebenfalls verkürzt sich die Gesamtlänge des Verbunds der in Reihe geschalteten Federelemente Zusatzferder 16 und Nachführfederelemt 44. Dabei wird aufgrund der deutlich geringeren Federsteifigkeit des Nachführfederelementes 44 im Vergleich zur Zusatzfeder 16 die Zusatzfeder 16 im Vergleich zum Nachführfederelemt 44 geringfügig komprimiert. Der in Fig. 2b gezeigte Fall stellt den statischen bzw. quasistatischen Fall dar, bei dem der Verstellbereich der Dämpfereinrichtung 20 in Richtung Einfederung ausgenutzt ist.

Das gleiche Funktionsprinzip gilt bei einer statischen bzw. quasistatischen Ausfederbelastung, wie sie in der Fig. 2c dargestellt ist. Hier wird der statischen bzw. quasistatischen Fall gezeigt, bei dem der Verstellbereich der Dämpfereinrichtung 20 in Richtung Ausfederung ausgenutzt ist. Die Vergrößerung der Gesamtlänge des Verbunds der in Reihe geschalteten Federelemente Zusatzferder 16 und Nachführfederelemt 44 wird aufgrund der geringeren Federsteifigkeit des Nachführfederelementes 44 im Wesentlichen durch die Verlängerung des Nachführfederelementes 44 bewirkt.

Im Fahrbetrieb des Kraftfahrzeugs bedeutet dies, dass unabhängig von dem statischen bzw. quasistatischen Belastungszustand für den konstruktiv vorgegebenen Spaltabstand s aufgrund der noch nicht signifikant wirkenden Zusatzfeder 16 die "weichere" Gesamtfederkennung beim Einfedern erhalten bleibt, verbunden mit einem komfortablen Anfederverhalten der Radaufhängung und einer akustisch hervorragenden Geräusch- und Schwingungsdämpfung, insbesondere bei hochfrequenten Fahrbahnanregungen.

Wird das Federbein 10 im Fahrbetrieb des PKW's dynamisch in Einfederrichtung so belastet, dass die zeit- und belastungsabhängige Längenanpassung der Dämpfungseinrichtung 20 nicht ausreicht, um die Änderung des Spaltabstandes s kleiner zu halten als den Spaltabstand s im statischen oder quasistatischen Belastungszustand, so wirkt die Zusatzfeder 20, wie dies in der Fig. 2d dargestellt ist, nach Überbrückung des Spaltabstandes s signifikant über die zu ihr funktionell in Reihe geschalteten Elemente Dämpfungseinrichtung 20 und Progressionsfederelement 36a zwischen Aufbau 24 und Radführungselement 24'.

Wird das Federbein 10 im Fahrbetrieb des PKW's dynamisch in Ausfederrichtung so entlastet, dass die zeit- und belastungsabhängige Längenanpassung der Dämpfungseinrichtung 20, die im Entlastungsfall durch das Nachführfederelement 44 bewirkt wird, nicht ausreicht, um den Ausfederweg auszugleichen, so wird die Zusatzfeder 16, wie dies in Figur 2e dargestellt ist, einseitig an einer nicht am angrenzenden Bauteil fixierten Seite abheben. Der Spaltabstand s wird während der relativ kurzen dynamischen Ausfederphase durch die Wechselwirkung von Nachführfederelement 44 und Positionierfederelement 36 über die Dämpfereinrichtung 20 in nicht relevanter Weise vergrößert. Relevant ist in diesem Fall, dass die Längenänderung der Dämpfereinrichtung 20 während der dynamischen Ausfederphase relativ gering ist, damit am Ende der dynamischen Ausfederphase die Änderung des Spaltabstandes s im Vergleich zum Ausgangszustand gering ist. Das gewünschte Verhalten der Dämpfereinrichtung wird über die Drosselelemente bzw. Drosselventile 42 eingestellt.

In den Fig. 3a bis 3e sind nunmehr beispielhaft unterschiedliche Gestaltungs- bzw. Anordnungsmöglichkeiten der aus Dämpfereinrichtung 20, Positionierfeder 36, Progressionsfeder 36a und Nachführfeder 44 aufgebauten Feder-/Dämpfereinheit 15 mitsamt dieser Feder-/Dämpfereinheit 15 zugeordneter Zusatzfeder 16 dargestellt, jedoch aus Übersichtlichkeitsgründen ohne Tragfeder 12 und Stoßdämpfer 14.

Konkret zeigt die Fig. 3a einen im Wesentlichen der Anordnung der Fig. 2a und damit der Fig. 1 a entsprechenden Aufbau, so dass darauf nicht mehr näher eingegangen wird.

Die Fig. 3b zeigt einen Aufbau, bei dem die Anordnung der Zusatzfeder 16 und der Feder-/Dämpfereinheit 15 vertikal getauscht ist.

Die Fig. 3c zeigt einen im Wesentlichen dem Aufbau der Fig. 1b entsprechenden Aufbau bzw. Anordnung, bei dem die Dämpfereinrichtung 20 nunmehr in Fahrzeughochachsenrichtung oben, dem Aufbau 24 zugeordnet, angeordnet ist, während Positionierfeder 36 und Progressionsfeder 36a der Zusatzfeder 16 zugewandt sind.

Die Fig. 3d zeigt einen im Wesentlichen dem Aufbau der Fig. 1a entsprechenden Aufbau bzw. Anordnung, bei dem die Progressionsfeder 36a nunmehr dämpfereinrichtungsseitig angeordnet ist.

Die Fig. 3e zeigt schließlich einen Aufbau, bei dem das Positionierfederelement und das Progressionsfederelement durch ein einziges Federelement 36'bzw. Elastomerelement gebildet sind, das eine progressive Federkennlinie aufweist, insbesondere eine progressive Federkennlinie mit einer ab einem definierten Verlagerungsweg stark ansteigenden hohen Progression aufweist.

In den Fig. 4a bis 4g sind nunmehr mögliche Anordnungen der Zusatzfeder 16 mitsamt zugeordneter Feder-/Dämpfereinheit 15 innerhalb unterschiedlicher Feder-/Dämpfersysteme gezeigt, wobei bei allen gezeigten Varianten die Haupt- bzw. Tragfeder 12, der Haupt- bzw. Stoßdämpfer 14 und die Zusatzfeder 16 parallel geschalten sind.

So zeigt die Fig. 4a einen Aufbau, bei dem der Stoßdämpfer 14, die Tragfeder 12 und die Feder-/Dämpfereinheit 15 mitsamt dieser zugeordneten Zusatzfeder 16 allesamt radseitig an einem einzigen Radführungselement 24' als radseitigem Element angebunden sind. Das Radführungselement 24'kann dabei ein Radträger oder ein Achslenker oder ein Tragarm oder dergleichen sein.

Die Fig. 4b zeigt einen Aufbau, bei dem der Stoßdämpfer 14, die Tragfeder 12 und die Feder-/Dämpfereinheit 15 mitsamt dieser zugeordneten Zusatzfeder 16 jeweils an verschiedenen Bauteilen eines Radführungselementes 24' angebunden sind, wobei diese radseitigen Bauteile zum Beispiel relativ zueinander beweglich sein können. Auch eine gruppenweise Anbindung von Stoßdämpfer 14, Tragfeder 12 sowie von Feder-/Dämpfereinheit15 mitsamt dieser zugeordneten Zusatzfeder 16 an einzelnen radführungselementseitigen Bauteilen ist selbstverständlich möglich.

Die Fig. 4c zeigt einen verschachtelten Aufbau, bei dem die Feder-/Dämpfereinheit 15 mitsamt dieser zugeordneten Zusatzfeder 16 als Zusatzfedereinheit mit der die Hauptfedereinheit ausbildenden Tragfeder 12 verschachtelt ist.

Die Fig. 4d zeigt einen der Fig. 4a entsprechenden Aufbau mit bezogen auf die Fahrzeughochachsenrichtung umgedrehtem Einbau von Zusatzfeder 16 und Feder-/Dämpfereinheit 15.

Die Fig. 4e zeigt einen Aufbau, bei dem die Feder-/Dämpfereinheit 15 mitsamt dieser zugeordneten Zusatzfeder 16 in Fahrzeughochachsenrichtung gesehen auf dem Stoßdämpfer 20 angeordnet ist, der sich ebenso wie die Feder-/Dämpfereinheit 15 am Aufbau 24 abstützt.

Die Fig. 4f zeigt einen im Wesentlichen der Fig. 4e entsprechenden Aufbau, bei dem durch entsprechende Verschachtelung der Tragfeder 12 ein Federbein ausgebildet wird.

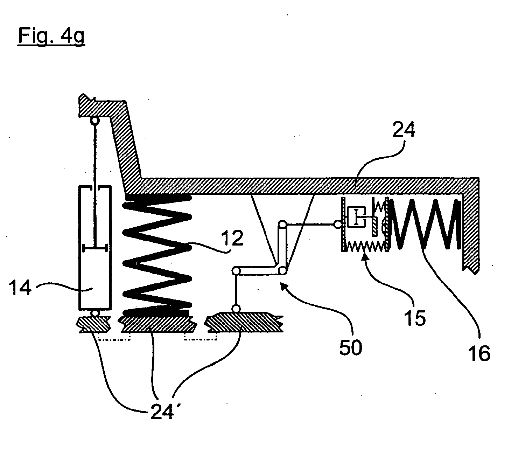

Die Fig. 4g zeigt beispielhaft anhand der Feder-/Dämpfereinheit 15 mitsamt zugeordneter Zusatzfeder 16, dass die Tragfeder 12 und/oder der Stoßdämpfer 14 und/oder die Zusatzfeder 14 über ein kinematisches System 50, zum Beispiel ein Getriebe oder dergleichen, so gekoppelt sein können, dass die fahrzeugbezogene Wirkrichtung (= Sollfunktion) von der unmittelbaren Wirkrichtung des jeweiligen Elementes abweicht.

Es versteht sich, dass sämtliche insbesondere in den Prinzipskizzen der Figuren 2, 3 und 4 gezeigten Varianten selbstverständlich beliebig miteinander kombiniert werden können, um die erfindungsgemäße Grundidee zu realisieren. Das heißt, dass selbstverständlich auch alle diejenigen Variationsmöglichkeiten, die hier nicht explizit gezeigt sind, ausdrücklich vom Schutzumfang der vorliegenden Erfindungsidee umfasst sind.

An dieser Stelle sei weiter ausdrücklich erwähnt, dass von der vorliegenden Erfindungsidee selbstverständlich auch der Fall umfasst ist, gemäß dem die einzelnen Elemente zwar keine gleiche Hauptwirkrichtung haben, das heißt in einem gewissen Winkel zueinander angestellt sind, dass Sie aber eine Wirkrichtungsüberschneidung, insbesondere in Fahrzeughochachsenrichtung, bzw. in der durch die Kinematik der Radaufhängung vorgegebenen Bewegungsrichtung des Rades, haben. Denn aufgrund in der Praxis auftretenden baulichen Zwängen können Feder- und Dämpferelemente gegebenenfalls zum Teil nicht funktional ideal ausgerichtet verbaut werden. Eine infolgedessen üblicherweise unerwünschte Verspannung der Radaufhängung in die Nebenrichtungen wird in diesen Fällen gegebenenfalls toleriert.

## Patentansprüche

1. Feder-Dämpfersystem, insbesondere für eine Radaufhängung von Kraftfahrzeugen, mit wenigstens einer Tragfeder (12), wenigstens einem Stoßdämpfer (14) und wenigstens einer Zusatzfeder (16), die zwischen einem Aufbau (24) des Kraftfahrzeugs und wenigstens einem Radführungselement (24') angeordnet sind,
**dadurch gekennzeichnet,**
**dass** zwischen der mindestens einen Zusatzfeder (16) und dem Aufbau (24) oder zwischen der mindestens einen Zusatzfeder (16) und dem Radführungselement (24') eine Feder-/Dämpfereinheit (15) eingeschaltet ist, die eine Dämpfereinrichtung (20) sowie ein Positionierfederelement (36) aufweist, die mittelbar oder unmittelbar miteinander gekoppelt sowie in Reihe geschaltet sind,
**dass** auf der dem Positionierfederelement (36) zugewandten Positionierfederelementseite der Feder-/Dämpfereinheit (15) ein weiteres ein- oder mehrteiliges Federelement (36a) in Form eines Progressionsfederelementes angeordnet ist, das, mittelbar oder unmittelbar, an der Dämpfereinrichtung (20) und/oder an dem der Dämpfereinrichtung (20) positionierfederelementseitig gegenüberliegenden Bauteil angebunden ist und das in einer definierten Grundstellung einen definierten progressionsfederelementseitigen Spaltabstand (s) als Federweg ausbildet, und
**dass** die Feder-/Dämpfereinheit (15) ferner ein Nachführfederelement (44) aufweist, das auf funktionell gegenüberliegenden Seiten der Dämpfereinrichtung (20) an einem dort jeweils zugeordneten Bauteil angreift und/oder angebunden ist.

2. Feder-Dämpfersystem nach Anspruch 1, **dadurch gekennzeichnet, dass** das Nachführfederelement (44) so auf funktionell gegenüberliegenden Seiten der Dämpfereinrichtung (20) an einem dort jeweils zugeordneten Bauteil abgestützt und/oder angebunden ist, dass bei fehlender Druckbelastung, insbesondere bei einer definierten statischen oder quasistatischen Be- oder Entlastung, des Feder-/Dämpfersystems, ein Nachführen der positionierfederabgewandten Seite der Dämpfereinrichtung (20) erfolgt, insbesondere dergestalt, dass damit auch ein beidseitiges Anliegen der Zusatzfeder (16) an einerseits der Feder-/Dämpfereinheit (15) und an andererseits dem Aufbau (24) oder dem Radführungselement (24') erfolgt.

3. Feder-Dämpfersystem nach Anspruch 1 oder 2, **dadurch gekennzeichnet, dass** das Nachführfederelement (44) einerseits mittel- oder unmittelbar an der positionsfederelementabgewandten Seite der Dämpfereinrichtung (20) und anderseits auf der gegenüberliegenden Seite der Dämpfereinrichtung (20) mittel- oder unmittelbar an dem der Dämpfereinrichtung (20) positionierfederelementseitig gegenüberliegenden Bauteil, insbesondere am Aufbau (24) oder am Radführungselement (24'), angebunden ist.

4. Feder-Dämpfersystem nach Anspruch 3, **dadurch gekennzeichnet, dass** im statischen oder quasistatischen Zustand innerhalb des Einstellbereiches der Feder-/Dämpfereinheit (15) die Größe des Progressionsfederelement-Spaltabstandes (s) durch die Länge des entspannten Positionierfederelementes (36) und/oder durch das Hystereseverhalten der Dämpfereinrichtung (20) vorgegeben ist.

5. Feder-Dämpfersystem nach einem der vorhergehenden Ansprüche, **dadurch gekennzeichnet, dass** die Feder-/Dämpfereinheit (15) so ausgelegt ist, dass das Positionierfederelement (36) die Dämpfereinrichtung (20) bei einer definierten Belastung, insbesondere bei einer definierten statischen oder quasistatischen Belastung, und einer dadurch bedingten Relativverlagerung zwischen Aufbau (24) und Radführungselement (24') so nachführt, dass sich ein Progressionsfederelement-Spaltabstand, insbesondere in etwa der Progressionsfederelement-Spaltabstand (s)der Grundstellung , einstellt, während bei einer demgegenüber definiert größeren, insbesondere dynamischen Belastung in Druckrichtung, die zeit- und belastungsabhängige Längenanpassung der Dämpfungseinrichtung (20) nicht ausreicht, um die Änderung des Progressionsfederelement-Spaltabstandes (s) kleiner zu halten als den Progressionsfederelement-Spaltabstand (s) im statischen oder quasistatischen Belastungszustand und dadurch das Progressionsfederelement (36a) unter Überbrückung des Progressionsfederelement-Spaltabstandes (s) in eine Anlage- und Wirkverbindung mit dem entsprechend spaltabstandseitig zugeordneten Bauteil gelangt.

6. Feder-Dämpfersystem nach einem der vorhergehenden Ansprüche, **dadurch gekennzeichnet, dass** das Positionierfederelement (36) und das Progressionsfederelement (36a) durch zwei separate Federelemente oder zwei an einem Bauteil ausgebildete Federelementabschnitte gebildet sind oder dass das Positionierfederelement (36) und das Progressionsfederelement (36a) durch ein einziges Federelement (36'), insbesondere ein Elastomerelement, gebildet sind, das eine progressive Federkennlinie aufweist, insbesondere eine progressive Federkennlinie mit einer ab einem definierten Verlagerungsweg stark ansteigenden hoher Progression.

7. Feder-Dämpfersystem nach einem der vorhergehenden Ansprüche, **dadurch gekennzeichnet, dass** die wenigstens eine Dämpfereinrichtung (20) des Feder-Dämpfersystems durch einen hydraulisch oder elektrisch wirkenden Dämpfer gebildet ist.

8. Feder-Dämpfersystem nach einem der vorhergehenden Ansprüche, **dadurch gekennzeichnet, dass** die Dämpfereinrichtung (20) als hydraulische Dämpfereinrichtung (20) ausgebildet ist, dessen Gehäuse (28) durch ein Trennelement (30) in mehrere, insbesondere zwei Hydraulikkammern (28a, 28b) unterteilt ist, wobei das Trennelement (30) zumindest eine Einrichtung (42) zum definierten Überströmen von in den Hydraulikkammern (28a, 28b) befindlicher Hydraulikflüssigkeit aufweist.

9. Feder-Dämpfersystem nach Anspruch 8, , **dadurch gekennzeichnet, dass** die hydraulische Dämpfereinrichtung (20) mit ringzylindrischem Gehäuse (28) und die Zusatzfeder (16) aus gummielastischem Material ringförmig um eine Kolbenstange (14b) des Stoßdämpfers (14) herum angeordnet sind.

10. Feder-Dämpfersystem nach Anspruch 8 oder 9, **dadurch gekennzeichnet, dass** das Trennelement (30) als Ringkolben mit einer aus dem Gehäuses (28) herausgeführten Stellhülse (32) ausgeführt ist und/oder dass,die Stellhülse (32) mit einer die Zusatzfeder (16) teilweise umschließenden Stütztasse (34) fest verbunden ist.

11. Feder-Dämpfersystem nach einem der vorhergehenden Ansprüche, **dadurch gekennzeichnet, dass** die Positionierfeder (36) durch eine ringförmige Büchse aus gummielastischem Material gebildet ist, die zwischen einem Gehäuse (28) der Dämpfungseinrichtung (20) und einem mittelbar oder unmittelbar am Aufbau (24) oder Radführungselement (24') des Kraftfahrzeuges befestigten und/oder abgestützten Lagergehäuse (18a, 18b, 18d) für ein eine Kolbenstange (14b) des Stoßdämpfers (14) aufnehmendes Dämpferlager (18) eingesetzt ist und den Progressionsfederelement-Spaltabstand (s) als Einfederweg mit relativ geringer Federsteifigkeit definiert.

12. Feder-Dämpfersystem nach einem der vorhergehenden Ansprüche, **dadurch gekennzeichnet, dass** zwischen einem Gehäuse (28) der Dämpfungseinrichtung (20) und einem Lagergehäuse (18d) eines Dämpferlagers (18) ein das Progressionsfederelement ausbildender gummielastischer Anschlag (36a), vorzugsweise ein ringförmiger gummielastischer Anschlag (36a), vorgesehen ist.

13. Feder-Dämpfersystem nach einem der Ansprüche 8 bis 12, **dadurch gekennzeichnet, dass** zwischen der dem Progressionsfederelement (36a) abgewandten Seite des Gehäuses (28) der Dämpfungseinrichtung (20) und einer der Zusatzfeder (16) zugewandten Stütztasse (34) des Trennelementes (30) ein bevorzugt ringförmiger, gummielastischer Anschlag (38) vorgesehen ist.

14. Feder-Dämpfersystem nach einem der Ansprüche 8 bis 13, **dadurch gekennzeichnet, dass** in das Trennelement (30), insbesondere in einen das Trennelement ausbildenden Ringkolben, ein oder mehrere Drosselventile (42) als Drosseleinrichtung eingesetzt sind, wobei bevorzugt vorgesehen ist, dass die Drosseleinrichtung so ausgelegt ist, dass auch andere als proportionale Abhängigkeiten zwischen Dämpferkraft und Längenänderungsgeschwindigkeit der Dämpfereinrichtung (20) realisierbar sind und,gegebenenfalls auch ein Blockieren der Dämpfereinrichtung (20) bei Erreichen einer Schwell-Dämpferkraft möglich ist, wodurch bei einem dynamischen Einfedern aufgrund der dann relativ hohen Dämpfereinrichtungskraft und der im Vergleich dazu relativ geringen Positionierfederelementsteifigkeit der Progressionsfederelement-Spaltabstand (s) überbrückt wird und dadurch die Zusatzfeder (16) über das Progressionsfederelement (36a) und über die Dämpfereinrichtung (20) zum Einsatz kommt.

15. Feder-Dämpfersystem nach einem der vorhergehenden Ansprüche, **dadurch gekennzeichnet, dass** die Feder-/Dämpfereinheit (15) an einem Federbein (10) der Radaufhängung des Kraftfahrzeuges mit einer Schraubendruckfeder als Tragfeder (12) verwendet ist, die um den Teleskop-Stoßdämpfer (14) und um die Zusatzfeder (16) und die Feder-/Dämpfereinheit (15) herum angeordnet ist und sich an einem aufbauseitigen Federteller (22) einerseits und an einem Federteller an einem Radaufhängungselement oder an dem Dämpferrohr (14a) des Stoßdämpfers (14) andererseits abstützt.

## Claims

1. Spring damper system, in particular for a wheel suspension of motor vehicles, comprising at least one bearing spring (12), at least one shock absorber (14) and at least one overload spring (16), which are arranged between a body (24) of the motor vehicle and at least one wheel guide element (24'), **characterised in that** a spring/damper unit (15) is connected between the at least one overload spring (16) and the body (24) or between the at least one overload spring (16) and the wheel guide element (24'), and has a damping device (20) and a positioning spring element (36) which are indirectly or directly intercoupled and connected in series, **in that** another one-part or multipart spring element (36a), in the form of a progression spring element, is arranged at the positioning spring element end, which faces the positioning spring element (36), of the spring/damper unit (15) and said one-part or multipart spring element is indirectly or directly attached to the damping device (20) and/or to the component opposite the damping device (20) at the positioning spring element end and forms, in a defined normal position, a defined progression spring element end gap clearance (s) as the spring excursion, and **in that** the spring/damper unit (15) also has a compensating spring element (44) which, at functionally opposite ends of the damping device (20), acts on and/or is attached to an associated component at that location.

2. Spring damper system according to claim 1, **characterised in that**, at functionally opposite ends of the damping device (20), the compensating spring element (44) is supported on and/or attached to an associated component at that location, such that, in the absence of compression loading, in particular in the case of a defined static or quasi-static loading or un-loading, of the spring/damper system, compensation of the end, which faces away from the positioning spring, of the damping device (20) occurs, in particular in such a way that double-ended contact of the overload spring (16) thereby also occurs, with the spring/damper unit (15) at one end and the body (24) or the wheel guide element (24') at the other end.

3. Spring damper system according to either claim 1 or claim 2, **characterised in that** the compensating spring element (44) is attached, on the one hand, either indirectly or directly to the end, which faces away from the positioning spring element, of the damping device (20) and, on the other hand, at the opposite end of the damping device (20), indirectly or directly to the component opposite the damping device (20) at the positioning spring element end, in particular to the body (24) or to the wheel guide element (24').

4. Spring damper system according to claim 3, **characterised in that**, in the static or quasi-static state, the dimensions of the progression spring element gap clearance (s) are predetermined within the adjustment range of the spring/damper unit (15) by the length of the unstressed positioning spring element (36) and/or by the hysteresis behaviour of the damping device (20).

5. Spring damper system according to any of the preceding claims, **characterised in that** the spring/damper unit (15) is designed such that the positioning spring element (36) compensates the damping device (20) in the case of a defined loading, in particular in the case of a defined static or quasi-static loading, and of a relative displacement between the body (24) and the wheel guide element (24') caused thereby, such that a progression spring element gap clearance, in particular approximately the progression spring element gap clearance (s) of the normal position, is adjusted, whereas, in the case of a larger, in particular dynamic, loading, defined by contrast therewith, in the compression direction, the time-dependent and load-dependent length adjustment of the damping device (20) is insufficient to keep the alteration in the progression spring element gap clearance (s) smaller than the progression spring element gap clearance (s) in the static or quasi-static loading state and the progression spring element (36a) thus comes into a contacting and operative connection with the component accordingly associated at the gap clearance end, bridging the progression spring element gap clearance (s).

6. Spring damper system according to any of the preceding claims, **characterised in that** the positioning spring element (36) and the progression spring element (36a) are formed by two separate spring elements (36a) or two spring element portions formed on a component, or **in that** the positioning spring element (36) and the progression spring element (36a) are formed by a single spring element (36'), in particular an elastomeric element, which has a progressive spring characteristic curve, in particular a progressive spring characteristic curve having a markedly increasing high progression from a defined displacement distance.

7. Spring damper system according to any of the preceding claims, **characterised in that** the at least one damping device (20) of the spring damper system is formed by a hydraulic or electric damper.

8. Spring damper system according to any of the preceding claims, **characterised in that** the damping device (20) is formed as a hydraulic damping device (20), the housing (28) of which is divided by a separating element (30) into a plurality of, in particular two, hydraulic chambers (28a, 28b), the separating element (30) having at least one device (42) for defined overflowing of hydraulic fluid located in the hydraulic chambers (28a, 28b).

9. Spring damper system according to claim 8, **characterised in that** the hydraulic damping device (20), together with an annularly cylindrical housing (28), and the overload spring (16) made of rubber-elastic material are arranged annularly about a piston rod (14b) of the shock absorber (14).

10. Spring damper system according to either claim 8 or claim 9, **characterised in that** the separating element (30) is constructed as an annular piston comprising an adjustment sleeve (32) which is guided out of the housing (28), and/or **in that** the adjustment sleeve (32) is rigidly connected to a support cup (34) which surrounds the overload spring (16) in part.

11. Spring damper system according to any of the preceding claims, **characterised in that** the positioning spring (36) is formed by an annular bushing made of rubber-elastic material, which bushing is inserted between a housing (28) of the damping device (20) and a bearing housing (18a, 18b, 18d) for a damper bearing (18) which receives a piston rod (14b) of the shock absorber (14), which bearing housing is indirectly or directly fixed to and/or supported on the body (24) or wheel guide element (24') of the motor vehicle, said bushing defining the progression spring element gap clearance (s) as a deflection distance with relatively low spring stiffness.

12. Spring damper system according to any of the preceding claims, **characterised in that** a rubber-elastic stop (36a), preferably an annular rubber-elastic stop (36a), which forms the progression spring element is provided between a housing (28) of the damping device (20) and a bearing housing (18d) of a damper bearing (18).

13. Spring damper system according to any of claims 8 to 12, **characterised in that** a preferably annular, rubber-elastic stop (38) is provided between the end, which faces away from the progression spring element (36a), of the housing (28) of the damping device (20) and a support cup (34), which faces the overload spring (16), of the separating element (30).

14. Spring damper system according to any of claims 8 to 13, **characterised in that** one or more throttle valves (42) are inserted as a throttle device into the separating element (30), in particular into an annular piston which forms the separating element, it being preferably provided for the throttle device to be designed in such a way that dependencies other than those of a proportional nature can be produced between the damping force and the speed of length alteration of the damping device (20), and blocking of the damping device (20) on reaching a threshold damping force is optionally also possible, by which means the progression spring element gap clearance (s) is bridged in the case of a dynamic deflection owing to the then relatively high damping device force and the comparatively relatively low positioning spring element stiffness, and the overload spring (16) thus comes into operation via the progression spring element (36a) and the damping device (20).

15. Spring damper system according to any of the preceding claims, **characterised in that** the spring/damper unit (15) is used at a shock-absorbing leg (10) of the wheel suspension of the motor vehicle with a helical compression spring which acts as the bearing spring (12), is arranged about the telescopic shock-absorber (14) and about the overload spring (16) and the spring/damper unit (15) and is supported, on one hand, on a spring plate (22) at the body end and, on the other hand, on a spring plate on a wheel suspension element or on the damping tube (14a) of the shock absorber (14).

## Revendications

1. Système d'amortissement à ressort, en particulier pour une suspension de roue de véhicules automobiles, comportant au moins un ressort porteur (12), au moins un amortisseur de chocs (14) et au moins un ressort d'appoint (16), qui sont aménagés entre une structure (24) du véhicule automobile et au moins un élément de guidage de roue (24'),
**caractérisé en ce que**
entre le au moins un ressort d'appoint (16) et la structure (24) ou entre le au moins un ressort d'appoint (16) et l'élément de guidage de roue (24') est intercalée une unité de ressort/amortisseur (15) qui présente un dispositif d'amortissement (20) ainsi qu'un élément élastique de positionnement (36), qui sont couplés l'un avec l'autre indirectement ou directement et sont commutés en série,
du côté de l'élément élastique de positionnement tourné vers l'élément élastique de positionnement (36) de l'unité de ressort/- amortisseur (15) est aménagé sous la forme d'un élément élastique de progression un élément élastique unique ou multiple (36a), qui est lié indirectement ou indirectement au dispositif d'amortissement (20) et/ou au composant en regard du dispositif d'amortissement (20) du côté de l'élément élastique de positionnement et qui forme, dans une position de base définie, un intervalle d'écartement (s) défini du côté de l'élément élastique de progression comme course de ressort, et
l'unité de ressort/amortisseur (15) présente par ailleurs un élément élastique suiveur (44) qui s'engage, sur les côtés fonctionnellement en regard du dispositif d'amortissement (20), sur un composant qui lui est respectivement affecté et/ou lui est relié.

2. Système d'amortissement à ressort selon la revendication 1, **caractérisé en ce que** l'élément élastique suiveur (44) s'appuie et/ou se relie, sur les côtés fonctionnellement en regard du dispositif d'amortissement (20), sur un composant qui lui est respectivement affecté de sorte que, lors d'une sollicitation à la pression insuffisante, en particulier lors d'une sollicitation ou d'une détente statique ou quasi statique définie, du système de ressort/- amortisseur, il se fasse un suivi du côté opposé au ressort de positionnement du dispositif d'amortissement (20), en particulier en sorte qu'il se produise ainsi également une application bilatérale du ressort d'appoint (16) sur, d'une part, l'unité de ressort/amortisseur (15) et sur, d'autre part, la structure (24) ou sur l'élément de guidage de roue (24').

3. Système d'amortissement à ressort selon la revendication 1 ou la revendication 2, **caractérisé en ce que** l'élément élastique suiveur (44) est relié, d'une part, indirectement ou directement au côté du dispositif d'amortissement (20) opposé à l'élément élastique de positionnement et, d'autre part, indirectement ou directement au composant en regard du dispositif d'amortissement (20) du côté de l'élément élastique de positionnement, en particulier sur la structure (24) ou sur l'élément de guidage de roue (24').

4. Système d'amortissement à ressort selon la revendication 3, **caractérisé en ce que**, à l'état statique ou quasi statique dans la plage de réglage de l'unité de ressort/amortisseur (15), la grandeur de l'intervalle d'écartement (s) de l'élément élastique de progression est prédéterminée par la longueur de l'élément élastique de positionnement (36) détendu et/ou par le comportement à l'hystérésis du dispositif d'amortissement (20).

5. Système d'amortissement à ressort selon l'une quelconque des revendications précédentes, **caractérisé en ce que** l'unité de ressort/- amortisseur (15) est dimensionné de sorte que l'élément élastique de positionnement (36) suive le dispositif d'amortissement (20) lors d'une sollicitation définie, en particulier lors d'une sollicitation statique ou quasi statique définie et d'un déplacement relatif conditionné par cette situation entre la structure (24) et l'élément de guidage de roue (24') de sorte qu'un intervalle d'écartement de l'élément élastique de progression, en particulier se règle dans à peu près l'intervalle d'écartement (s) de l'élément élastique de progression de la position de base, tandis que, lors d'une plus grande sollicitation définie par rapport à celle-ci, en particulier une sollicitation dynamique dans le sens de compression, l'adaptation de longueur en fonction du temps et de la sollicitation du dispositif d'amortissement (20) ne suffit pas pour maintenir la modification de l'intervalle d'écartement (s) de l'élément élastique de progression plus petite que l'intervalle d'écartement (s) de l'élément élastique de progression à l'état de sollicitation statique ou quasi statique et, par suite, l'élément élastique de progression (36a) parvient, par pontage de l'intervalle d'écartement (s) de l'élément élastique de progression, à une liaison de contact ou liaison active avec le composant affecté de manière correspondante côté intervalle d'écartement.

6. Système d'amortissement à ressort selon l'une quelconque des revendications précédentes, **caractérisé en ce que** l'élément élastique de positionnement (36) et l'élément élastique de progression (36a) sont formés par deux éléments élastiques séparés ou par deux sections d'élément élastique formées sur un composant ou **en ce que** l'élément élastique de positionnement (36) et l'élément élastique de progression (36a) sont formés par un élément élastique unique (36'), en particulier un élément d'élastomère, qui présente une courbe caractéristique de flexibilité progressive, en particulier une courbe caractéristique de flexibilité progressive témoignant d'une progression élevée augmentant fortement à partir d'une course de déplacement définie.

7. Système d'amortissement à ressort selon l'une quelconque des revendications précédentes, **caractérisé en ce que** le au moins un dispositif d'amortissement (20) du système d'amortissement à ressort est formé par un amortisseur à fonctionnement hydraulique ou électrique.

8. Système d'amortissement à ressort selon l'une quelconque des revendications précédentes, **caractérisé en ce que** le dispositif d'amortissement (20) se présente sous la forme d'un dispositif d'amortissement hydraulique (20), dont le boîtier (28) est subdivisé par un élément de séparation (30) en plusieurs, en particulier deux chambres hydrauliques (28a, 28b), dans lequel l'élément séparateur (30) présente au moins un dispositif (42) pour le trop-plein défini d'un liquide hydraulique se trouvant dans les chambres hydrauliques (28a, 28b).

9. Système d'amortissement à ressort selon la revendication 8, **caractérisé en ce que** le dispositif d'amortissement hydraulique (20) avec le boîtier cylindrique (28) à base annulaire et le ressort d'appoint (16) en matériau élastique de type caoutchouc sont aménagés en forme annulaire autour d'une tige de piston (14b) de l'amortisseur de chocs (14).

10. Système d'amortissement à ressort selon la revendication 8 ou la revendication 9, **caractérisé en ce que** l'élément de séparation (30) se présente sous la forme d'un piston annulaire avec une douille de réglage (32) sortie du boîtier (28) et/ou **en ce que** la douille de réglage (32) est raccordée de manière fixe avec une coupe d'appui (34) entourant le ressort d'appoint (16).

11. Système d'amortissement à ressort selon l'une quelconque des revendications précédentes, **caractérisé en ce que** le ressort de positionnement (36) est formé par une bague annulaire en matériau élastique de type caoutchouc, qui est insérée entre un boîtier (28) du dispositif d'amortissement (20) et un logement de palier (18a, 18b, 18d)fixé et/ou appuyé indirectement ou directement sur la structure (24) ou sur l'élément de guidage de roue (24') du véhicule automobile pour un palier d'amortisseur (18) recevant une tige de piston (14b) de l'amortisseur de chocs (14) et définit l'intervalle d'écartement (s) de l'élément élastique de progression comme course de compression du ressort avec une rigidité du ressort relativement faible.

12. Système d'amortissement à ressort selon l'une quelconque des revendications précédentes, **caractérisé en ce qu'**il est prévu, entre un boîtier (28) du dispositif d'amortissement (20) et un logement (18d) d'un palier d'amortisseur (18), une butée élastique de type caoutchouc (36a) formant l'élément élastique de progression, de préférence une butée élastique de type caoutchouc (36a) de forme annulaire.

13. Système d'amortissement à ressort selon l'une quelconque des revendications 8 à 12, **caractérisé en ce qu'**il est prévu entre le côté, tourné à l'opposé de l'élément élastique de progression (36a), du boîtier (28) du dispositif d'amortissement (20) et une coupe d'appui (34) de l'élément de séparation (30) tournée vers le ressort d'appoint (16), une butée élastique de type caoutchouc (38) de préférence de forme annulaire.

14. Système d'amortissement à ressort selon l'une quelconque des revendications 8 à 13, **caractérisé en ce que** l'on insère dans l'élément de séparation (30), en particulier dans un piston annulaire formant l'élément de séparation, une ou plusieurs soupapes d'étranglement (42) comme dispositif d'étranglement, dans lequel il est prévu de préférence que le dispositif d'étranglement soit dimensionné de sorte que puissent être également réalisées d'autres dépendances que celles proportionnelle entre la force de l'amortisseur et la vitesse de modification de longueur du dispositif d'amortissement (20) et que soit également possible le cas échéant un blocage du dispositif d'amortissement (20) lorsqu'une force de seuil de l'amortisseur est atteinte, si bien que, lors d'une compression dynamique, en raison de la force alors relativement élevée du dispositif d'amortissement et de la rigidité relativement faible de l'élément élastique de positionnement, l'intervalle d'écartement (s) de l'élément élastique de progression est ponté et que le ressort d'appoint (16) vient s'engager sur l'élément élastique de progression (36a) et sur le dispositif d'amortissement (20).

15. Système d'amortissement à ressort selon l'une quelconque des revendications précédentes, **caractérisé en ce que** l'unité de ressort/- amortisseur (15) est utilisée sur une jambe de force à ressort (10) de la suspension de roue du véhicule automobile avec un ressort de compression cylindrique comme ressort porteur (12), qui est aménagé autour de l'amortisseur de chocs télescopique (14) et autour du ressort d'appoint (16) et de l'unité de ressort/- amortisseur (15) et s'appuie sur une coupelle de ressort côté structure (22), d'une part, et sur une coupelle de ressort, sur un élément de suspension de roue ou sur le tube (14a) de l'amortisseur de chocs (14), d'autre part.
